# EUROPÄISCHE PATENTSCHRIFT

(11) **EP 0 816 140 B1**
(45) Veröffentlichungstag und Bekanntmachung des Hinweises auf die Patenterteilung: **27.11.2002**
(21) Anmeldenummer: 97107142.8
(22) Anmeldetag: 30.04.1997
(51) Int. Cl.: B60G 15/06

(54) **Oberes Federbeinstützlager für Radaufhängungen in einem Kraftfahrzeug**
Upper strut mount for a motor vehicle suspension
Fixation supérieure pour jambe de suspension de véhicule à moteur

(30) Priorität: 27.06.1996 DE 19625585
(43) Veröffentlichungstag der Anmeldung: 07.01.1998
(73) Patentinhaber: ZF Lemförder Metallwaren AG, 49448 Lemförde (DE)
(72) Erfinder: Kammel, Helmut, 49401 Damme (DE); Siemer, Hubert, 49413 Dinklage (DE); Jördens, Ernst-Günther, 49401 Damme (DE)

(56) Entgegenhaltungen:
- EP-A- 0 039 133
- EP-A- 0 564 824
- DE-A- 4 326 197
- DE-A- 19 511 642
- DE-C- 4 104 859
- FR-A- 2 535 259
- US-A- 4 462 608
- US-A- 5 308 104
- US-A- 5 342 029
- PATENT ABSTRACTS OF JAPAN vol. 095, no. 010, 30.November 1995 & JP 07 167182 A (TOKAI RUBBER IND LTD), 4.Juli 1995,

## Beschreibung

Die Erfindung bezieht sich auf ein oberes Federbeinstützlager für Radaufhängungen in Kraftfahrzeugen nach dem Oberbegriff des Patentanspruches 1.

Aus der gattungsbildenden US 4,462,608 ist ein derartiges oberes Federbeinstützlager für Radaufhängungen in einem Kraftfahrzeug bekannt. Dieses besteht aus einem im vertikalen Schnitt topfförmigen metallischen Gehäuse sowie einem in diesem Gehäuse angeordneten Gummipuffer. Ein mit einem Dämpfer verbindbares Tragstück ragt mit sich annähernd radial erstreckenden Vorsprüngen in den mit ihm verbundenen Gummipuffer hinein. Das obere Ende einer den Dämpfer umgebenden Schraubenfeder stützt sich an einem ringförmigen Federpuffer ab, wobei ein radial gerichteter Gehäuseflansch als Widerlager für den Federpuffer dient. Eine an einem Kraftfahrzeugbauteil befestigbare Deckelplatte deckt den Gummipuffer an seiner Oberseite ab und ist mit dem Gehäuse verbunden. An der Unterseite des Gehäuses befindet sich ein den Dämpfer radial führender Kragenrand, der mit dem mit der Deckelplatte verbundenen metallischen Gehäuse einstückig aus Blech geformt ist.

In der nur bezüglich der Neuheit relevanten EP 734889 A1 wird ein oberes Federbeinstützlager für Radaufhängungen in einem Kraftfahrzeug beschrieben, das aus einem im vertikalen Schnitt topfförmigen metallischen Gehäuse besteht, einem in diesem Gehäuse angeordneten Gummipuffer und einem mit einem Dämpfer verbindbaren Tragstück, welches mit sich radial erstreckenden Vorsprüngen in den fest mit ihm verbundenen Gummipuffer hineinragt, wobei ein radial gerichteter Gehäuseflansch ein Widerlager für einen ringförmigen Federpuffer aus einem Elastomerwerkstoff, beispielsweise Gummi, bildet, gegen den sich das obere Ende einer den Dämpfer umgebenden Schraubenfeder des Federbeines abstützt. An einem Kraftfahrzeugbauteil befestigbar ist eine den Gummipuffer an seiner Oberseite abdeckende Deckelplatte des Gehäuses. Die Deckelplatte weist einen nach unten über den Federpuffer hinausragenden Mantelring auf, der den Federpuffer in axialer Richtung gesehen nach unten überragt. An der Unterseite des Gehäuses befindet sich ein den Dämpfer radial führender Kragenrand. Zur Optimierung der Wirkung und der Herstellung eines solchen Federbeines ist das metallische Gehänse mit dem an seiner Unterseite vorgesehenen Kragenrand einstückig aus Blech geformt und mit der Deckelplatte verstemmt.

Die in Umfangsrichtung zunehmende Federpufferhöhe, welche durch den Steigungswinkel der Schraubenfeder konstruktiv vorgegeben ist, führt zu einer in dieser Umfangsrichtung gesehen abnehmenden Steifigkeit des Federpuffers. Hierraus resultiert im belasteten Zustand eine in Umfangsrichtung gesehen zunehmende Einfederung des Federpuffers, welche eine seitliche Neigung der Schraubenfeder verursacht. Um diese seitliche Neigung möglichst gering zu halten, wird in DE 41 04 859 C1 eine Abstützung für eine Schraubenfeder eines am Fahrzeugaufbau kardanisch gelagerten Federbeines eines Kraftfahrzeugs vorgeschlagen, bei der die Schraubenfeder einerseits aufbauseitig über ein elastisches Zwischenstück an einem obenliegenden Widerlager und andererseits am Federbein über ein weiteres, ortsfest gehaltenes untenliegendes Widerlager abgestützt ist, wobei das Zwischenstück in axialer Wirkrichtung der Schraubenfeder mit Umfangsbereichen unterschiedlicher elastischer Kennung ausgebildet ist. In das Zwischenstück sind Ausnehmungen eingelassen, deren Querschnitte sich über den Umfang ändern.

Es ist Aufgabe der vorliegenden Erfindung, ein oberes Federbeinstützlager dahingehend zu verbessern, daß bei gleichem Bauraum und gleichem Steigungswinkel der Schraubenfeder größere Einfederungswege, mit besserem Federungskomfort, eine wenigstens gleichbleibende oder geringere seiltliche Neigung verursachen.

Die Erfindung löst diese Aufgabe durch Ausbildungsmerkmale nach dem Patentanspruch 1.

Das Gehäuse ist mit einer Deckelplatte verbunden, die einen nach unten über einen Federpuffer hinausreichenden Mantelring aufweist, in den das sich gegen den Federpuffer abstützende, obere Ende der Schraubenfeder des Federbeines hineinreicht. Durch eine derartige Gestaltung der Deckelplatte ergibt sich eine wesentliche Verbesserung der Stabilität des oberen Federbeinlagers und gleichzeitig eine radial wirksame Führung für das obere Ende der Schraubenfeder des Federbeines. Außerdem wird der Federpuffer aus Gummi oder dergleichen an seiner äußeren Mantelseite umschlossen, so daß eine seitliche Verquetschung des Werkstoffes des Federpuffers nicht mehr vorkommen kann.
Bei einem erfindungsgemäßen Federbeinstützlager sind darüber hinaus in den Federpuffer Ausnehmungen eingelassen. Diese Ausnehmungen befinden sich auf der Seite, mit der sich der Federpuffer gegen den radial gerichteten Gehäuseflansch abstützt.
In Umfangsrichtung gesehen sind diese Ausnehmungen den sich in Abhängigkeit von der auftretenden Belastung ändernden Querschnitten des Federpuffers angepaßt. Das bedeutet, in axialer Richtung gesehen sind die Bereiche, die einen geringen Querschnitt aufweisen, mit kleineren Ausnehmungen versehen, als die Bereiche größeren Querschnitts. Dadurch kann das Federbein in axialer Richtung bedarfsgerecht eingestellt werden. Dies läßt sich auch durch ein unterschiedliches Abstandsmaß zwischen den Ausnehmungen erzielen. Somit ist es erfindungsgemäß möglich, im Vergleich zu den im Stand der Technik bekannten Lösungen größere Federwege zu erzielen ohne die seitliche Neigung des Federbeines zu verschlechtern. Es können demnach größere Federwege übertragen werden, als bei bekannten Lösungen. Die über den Umfang des Federpuffers verteilten Ausnehmungen können beispielsweise in radialer Richtung durchgehende Nuten oder einfache Grübchen mit sich ändernder Geometrie sein Andere Geometrien liegen im Bereich des Erfindungsgedankens.

In der Zeichnung sind zwei bevorzugte Ausführungsbeispiele eines erfindungsgemäßen Federbeinstützlagers dargestellt.
Es zeigen:
**Figur 1:** einen Vertikalschnitt durch ein erstes Federbeinstützlager
**Figur 2:** einen Vertikalschnitt durch ein zweites Federbeinstützlager
**Figur 3:** einen erfindungsgemäßen Federpuffer als Einzelteil.

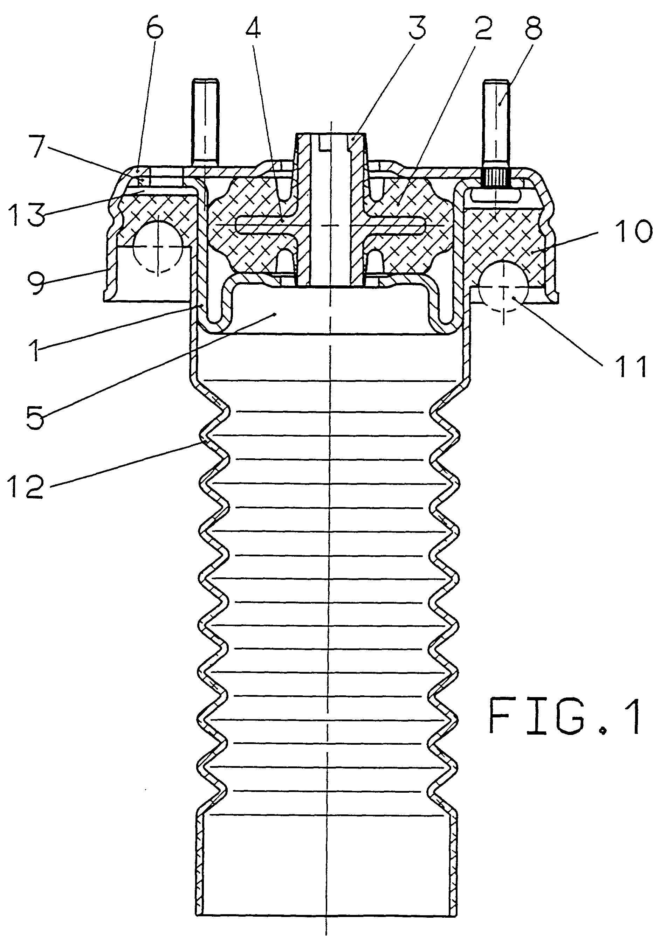

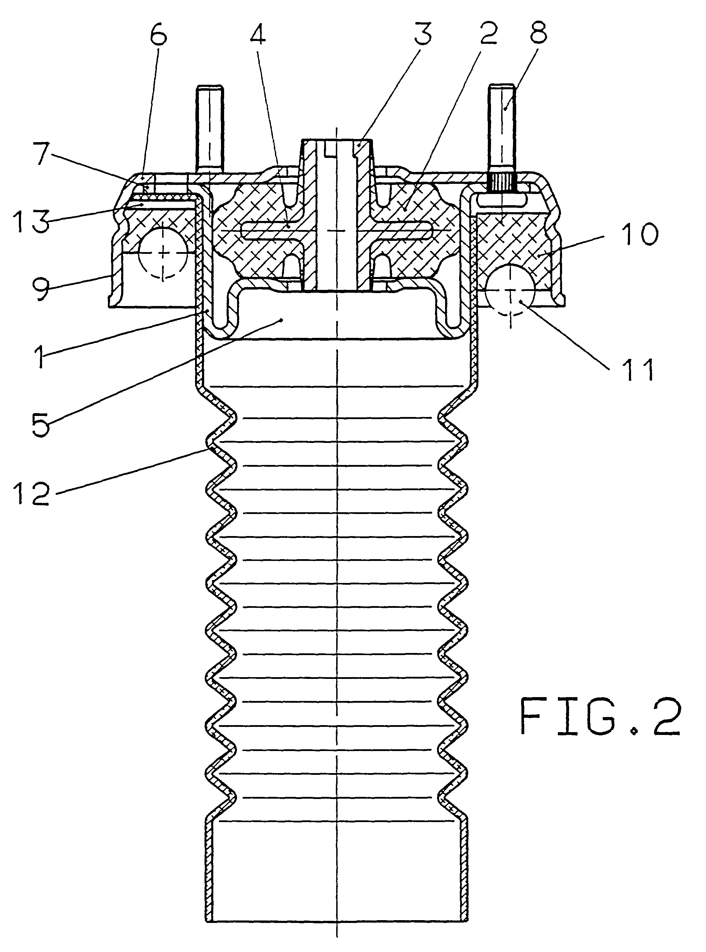

In den Ausführungsbeispielen besteht das obere Federbeinlager aus einem im vertikalen Schnitt in einer durch die Mittelachse des Federbeines gelegten Ebene topfförmigen metallischen Gehäuse 1, einem in diesem Gehäuse 1 angeordneten Gummipuffer 2 und einem mit dem in der Zeichnung nicht dargestellten Dämpfer verbindbaren Tragstück 3, welches radial gerichtete Vorsprünge 4 aufweist, die in den Werkstoff des Gummipuffers 2 hineinragen. An der Unterseite des Gehäuses 1 ist ein Kragenrand 5 einstückig mit der Wandung des Gehäuses 1 aus Blech geformt. In diesen Kragenrand 5 ragt das obere Ende des nicht dargestellten Dämpfers hinein, so daß es dadurch radial geführt und gehalten ist. Die Verbindung des Tragstückes 3 mit dem Dämpfer erfolgt durch die Bohrung in dem Tragstück 3. An der Oberseite wird das Gehäuse 1 durch eine Deckelplatte 6 abgeschlossen, die das Tragstück 3 mit einem Spielraum umgibt, so daß das Tragstück 3 unter Ausnutzung eines entsprechenden Spielraumes im Boden des Gehäuses 1 kardanisch gegenüber dem Gehäuse 1 beweglich ist. Die sich radial erstreckenden Vorsprünge 4 weisen bereichsweise Ausnehmungen 13 auf. Hierdurch läßt sich eine kardanisch verringerte Kennung in der Belastungsebene erreichen. In herkömmlicher Weise wird der Gummipuffer 2 in dem Gehäuse 1 mit der Deckelplatte 6 eingespannt. Der radial nach außen gerichtete Rand 7 des topfförmigen Gehäuses 1 und die Deckelplatte 6 sind miteinander verstemmt. Ermöglicht wird dadurch eine Endbehandlung sowohl des Gehäuses 1 als auch der Deckelplatte 6 vor der Montage. Beide Bauteile können somit bereits vor der Verbindung oberflächenbehandelt, insbesondere lackiert, sein. Bei einer Verschweißung früherer Bauart ist dies nicht möglich. An der Deckelplatte 6 befinden sich Befestigungselemente für die Verbindung mit einem Bauteil des Kraftfahrzeuges. Dargestellt sind Schrauben 8 zur Befestigung, die Bohrungen sowohl des radial gerichteten Gehäuseflansches 7 als auch der Deckelplatte 6 durchdringen. Die Deckelplatte 6 geht am Außenrand in einen Mantelring 9 über, der in axialer Richtung nach unten gerichtet ist und über einen Federpuffer 10 hinausreicht, gegen den sich das obere Ende der Schraubenfeder 11 des Federbeines abstützt. Im Ausführungsbeispiel entsprechend **Figur 1** ist ein den Dämpfer schützend umgebender Balg 12 einstückig mit dem Federpuffer 10 ausgebildet, so daß die Befestigung seines Oberendes durch den Federpuffer 10 bewirkt wird. Bei dem Ausführungsbeispiel entsprechend **Figur 2** weist das obere Ende des Dichtungsbalgs 12 einen nach außen gerichteten Flansch auf, der zwischen dem Federpuffer 10 und dem Gehäuseflansch 7 eingespannt ist. Aus beiden Darstellungen wird deutlich, daß der Federpuffer 10 und gegebenenfalls auch der radiale Flansch des Balgs 12 im Bereich der Schrauben 8 für die Befestigung des oberen Federbeinlagers an einem Kraftfahrzeugteil Ausnehmungen 13 aufweisen kann.
Zusätzlich sind in den Federpuffer 10 auf der Seite, mit der sich dieser gegen den radial gerichteten Gehäuseflansch 7 abstützt, über den Umfang sich verändernde Ausnehmungen 13 eingelassen, die eine gezielte axiale Dämfungscharakteristik des Federpuffers 10 ermöglichen, ohne die seitliche Neigung der Schraubenfeder 11 zu erhöhen.. Somit kann der Dämpfer in axialer Richtung bedarfsgerecht ausgelegt werden. Die Ausnehmungen 13 sind in den **Figuren 1 und 2** als in radialer Richtung durchgehende Nuten dargestellt.

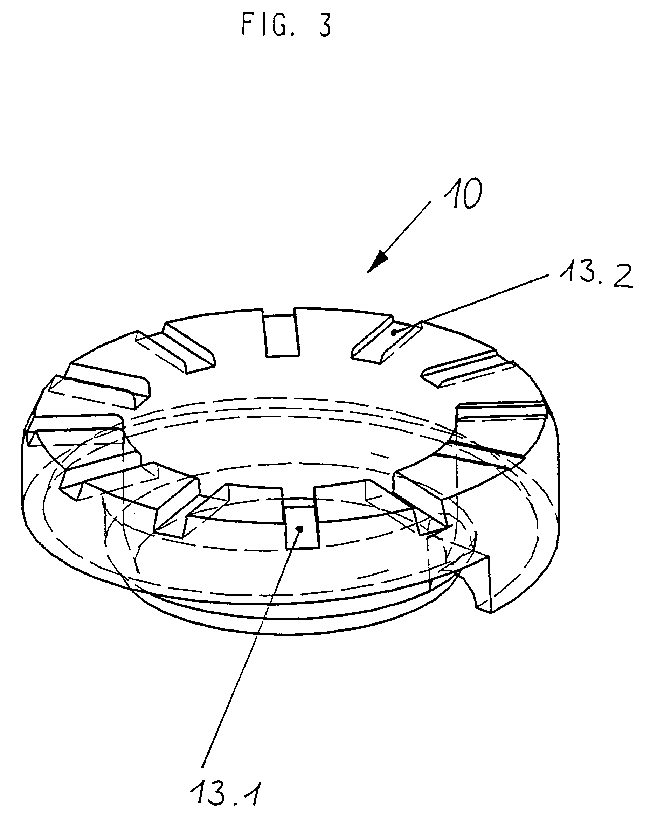

In **Figur 3** ist ein erfindungsgemäßer Federpuffer 10 als Einzelteil dargestellt.
Die Ausnehmungen 13 befinden sich auf der Seite, mit der sich der Federpuffer 10 gegen den radial gerichteten Gehäuseflansch 7 abstützt.
In Umfangsrichtung gesehen sind diese Ausnehmungen 13 den sich in Abhängigkeit von der auftretenden Belastung ändernden Querschnitten des Federpuffers 10 angepaßt. Das bedeutet, die Bereiche, die einen in axialer Richtung gesehen geringen Querschnitt aufweisen, mit größeren Ausnehmungen 13.1 versehen, als die Bereiche größeren Querschnitts. Dort sind die Abmessungen der Ausnehmungen 13.2 kleiner. Wie aus **Figur 3** entnehmbar, wurde der darin dargestellte Federpuffer 10 mit Ausnehmungen gleicher Breite, aber mit sich verändernder Tiefe versehen.

### Bezugszeichenliste:

- 1: Gehäuse
- 2: Gummipuffer
- 3: Tragstück
- 4: Vorsprung
- 5: Kragenrand
- 6: Deckelplatte
- 7: Gehäuseflansch
- 8: Schraube
- 9: Mantelring
- 10: Federpuffer
- 11: Schraubenfeder
- 12: Balg
- 13: Ausnehmung

## Patentansprüche

1. Oberes Federbeinstützlager für Radaufhängungen in einem Kraftfahrzeug, bestehend aus:
- einem im vertikalen Schnitt topfförmigen, metallischen Gehäuse (1),
- einem in diesem Gehäuse (1) angeordneten Gummipuffer (2),
- einem mit einem Dämpfer verbindbaren Tragstück (3), welches mit sich radial erstreckenden Vorsprüngen (4) in den fest mit ihm verbundenen Gummipuffer (2) hineinragt,
- einem ringförmigen Federpuffer (10), gegen den sich das obere Ende einer den Dämpfer umgebenden Schraubenfeder (11) abstützt,
- einem radial gerichteten Gehäuseflansch (7), der ein Widerlager für den Federpuffer (10) bildet,
- einer an einem Kraftfahrzeugbauteil befestigbaren, den Gummipuffer (2) an seiner Oberseite abdeckenden Deckelplatte (6), die mit dem Gehäuseflansch (7) verbunden ist,
- einem an der Unterseite des Gehäuses (1) befindlichen, den Dämpfer radial führenden Kragenrand (5), der mit dem metallischen Gehäuse (1) einstückig aus Blech geformt ist,
**dadurch gekennzeichnet, dass** das Gehäuse (1) mit der Deckelplatte (6) verstemmt ist, die Deckelplatte (6) einen in axialer Richtung nach unten über den Federpuffer (10) hinausreichenden Mantelring (9) aufweist, in den das sich gegen den Federpuffer (10) abstützende Ende der Schraubenfeder (11) des Federbeines hineinreicht und der Federpuffer (10) an seiner äußeren Seite vom Mantelring (9) und an seiner inneren Seite vom Gehäuse (1) umschlossen wird, und auf der sich an dem Gehäuseflansch (7) abstützenden Seite bereichsweise Ausnehmungen (13) mit sich in Umfangsrichtung belastungsabhängig ändernder Geometrie aufweist.

2. Oberes Federbeinstützlager nach Anspruch 1,
**dadurch gekennzeichnet, daß**
die Ausnehmungen (13) in Umfangsrichtung gesehen unterschiedliche Abstandsmaße zueinander aufweisen.

3. Oberes Federbeinstützlager nach einem oder mehreren der Ansprüche 1 bis 3,
**dadurch gekennzeichnet, daß**
die Ausnehmungen (13) in Umfangsrichtung gesehen unterschiedliche Neigungswinkel aufweisen.

4. Oberes Federbeinstützlager nach einem oder mehreren der Ansprüche 1 bis 4,
**dadurch gekennzeichnet, daß**
die Ausnehmungen (13) in Umfangsrichtung gesehen unterschiedliche Tiefen aufweisen.

## Claims

1. Upper strut mount for a motor vehicle suspension, consisting of:
- a metal casing (1) which is pot-shaped in vertical section,
- a rubber buffer (2) arranged in this casing (1),
- a supporting piece (3) connectable to a shock absorber, which supporting piece projects with radially extending projections (4) into the rubber buffer (2) fixedly connected to it,
- an annular spring buffer (10), against which the upper end of a coil spring (11) surrounding the shock absorber is supported,
- a radially directed casing flange (7) which forms an abutment for the spring buffer (10),
- a cover plate (6) fastenable to a motor vehicle part and covering the rubber buffer (2) on its top side, which cover plate is connected to the casing flange (7),
- a collar edge (5) located on the underside of the casing (1) and guiding the shock absorber radially, which collar edge is formed in one piece from sheet metal with the metal casing (1),
**characterized in that** the casing (1) is tamped with the cover plate (6), the cover plate (6) has a sheathing ring (9) extending in an axial direction downwards over the spring buffer (10), into which ring the end of the coil spring (11) of the strut supported against the spring buffer (10) extends and the spring buffer (10) is enclosed on its outer side by the sheathing ring (9) and on its inner side by the casing (1), and has in areas on the side supported on the casing flange (7) recesses (13) with a geometry which changes load-dependently in a circumferential direction.

2. Upper strut mount according to claim 1,
**characterized in that**
the recesses (13) have different gap dimensions in relation to one another seen in a circumferential direction.

3. Upper strut mount according to one or more of claims 1 to 2,
**characterized in that**
the recesses (13) have different angles of inclination seen in a circumferential direction.

4. Upper strut mount according to one or more of claims 1 to 4,
**characterized in that**
the recesses (13) have different depths seen in a circumferential direction.

## Revendications

1. Appui supérieur pour jambe de force à ressort pour suspensions de roues d'un véhicule automobile, constitué de:
- un boîtier métallique (1) en forme de pot en coupe verticale,
- un tampon caoutchouc (2) disposé dans ce boîtier (1),
- une pièce de support (3) qui peut être reliée à un amortisseur et qui s'engage, par des saillies (4) s'étendant radialement, dont le tampon caoutchouc (2) relié fixement à cette pièce de support,
- un tampon élastique (10) annulaire contre lequel prend appui l'extrémité supérieure d'un ressort hélicoïdal (11) entourant l'amortisseur,
- une bride de boîtier (7) dirigée radialement qui forme une contre-butée pour le tampon élastique (10),
- une plaque formant couvercle (6) qui peut être fixée à un composant du véhicule et qui recouvre le tampon caoutchouc (2) sur sa face supérieure et qui est reliée à la bride de boîtier (7),
- une collerette (5) qui se trouve sur la face inférieure du boîtier (1), qui guide radialement l'amortisseur, et qui est formée dans une tôle d'une seule pièce avec le boîtier métallique (1),
**Caractérisé en ce que** le boîtier (1) est maté avec la plaque formant couvercle (6),
la plaque formant couvercle (6) comporte un anneau d'enveloppe (9) qui s'étend dans la direction axiale en dépassant vers le bas du tampon élastique (10), et dans lequel pénètre l'extrémité, qui prend appui contre le tampon élastique (10), du ressort hélicoïdal (11) de la jambe de force à ressort, **en ce que** le tampon élastique (10) est entouré sur son côté extérieur par l'anneau d'enveloppe (9) et sur son côté intérieur par le boîtier (1), et **en ce que** le tampon élastique (10) présente par endroits, sur le côté qui prend appui contre la bride de boîtier (7), des évidements (13) dont la géométrie varie en fonction de la charge dans la direction périphérique.

2. Appui supérieur pour jambe de force à ressort selon la revendication 1,
**caractérisé en ce que**
les évidements (13) présentent des écartements différents, vus dans la direction périphérique.

3. Appui supérieur pour jambe de force à ressort selon une ou plusieurs des revendications 1 à 2,
**caractérisé en ce que**
les évidements (13) présentent des angles d'inclinaison différents, vus dans la direction périphérique.

4. Appui supérieur pour jambe de force à ressort selon une ou plusieurs des revendications 1 à 3,
**caractérisé en ce que**
les évidements (13) présentent des profondeurs différentes, vus dans la direction périphérique.
